# EUROPÄISCHE PATENTANMELDUNG

(11) **EP 3 975 154 A1**
(43) Veröffentlichungstag der Anmeldung: **30.03.2022**
(21) Anmeldenummer: 21191125.0
(22) Anmeldetag: 12.08.2021
(51) Int. Cl.: G08G 1/16, G08G 1/0967

(54) **VERFAHREN, COMPUTERPROGRAMM UND VORRICHTUNG ZUM BEREITSTELLEN VON GEFAHRENINFORMATIONEN**

(30) Priorität: 24.09.2020 DE 102020212032
(71) Anmelder: Volkswagen Aktiengesellschaft, 38440 Wolfsburg (DE)
(72) Erfinder: Bader, Viktor, 38448 Wolfsburg (DE)

(57) **Zusammenfassung**

Die vorliegende Erfindung betrifft ein Verfahren, ein Computerprogramm mit Instruktionen und eine Vorrichtung zum Bereitstellen von Gefahreninformationen für einen Verkehrsteilnehmer. Die Erfindung betrifft weiterhin ein Fortbewegungsmittel, in dem ein erfindungsgemäßes Verfahren oder eine erfindungsgemäße Vorrichtung eingesetzt wird. In einem ersten Schritt wird eine potentielle Gefahrensituation für den Verkehrsteilnehmer anhand von Sensordaten einer Umfeldsensorik eines Fortbewegungsmittels detektiert (10). In diesem Zusammenhang kann zudem eine Kollisionswahrscheinlichkeit ermittelt werden (11). Des Weiteren werden in Bezug auf die Gefahrensituation zu übermittelnde Gefahreninformationen bestimmt (12). Diese werden dann mittels lichtbasierter Datenübertragung an den Verkehrsteilnehmer übermittelt (13). Zusätzlich können auch an weitere Verkehrsteilnehmer mittels lichtbasierter Datenübertragung Information übermittelt werden (14). Das Bestimmen und Übermitteln von Gefahreninformation kann an die Bedingung geknüpft sein, dass die Kollisionswahrscheinlichkeit einen Schwellwert übersteigt.

## Beschreibung

Die vorliegende Erfindung betrifft ein Verfahren, ein Computerprogramm mit Instruktionen und eine Vorrichtung zum Bereitstellen von Gefahreninformationen für einen Verkehrsteilnehmer. Die Erfindung betrifft weiterhin ein Fortbewegungsmittel, in dem ein erfindungsgemäßes Verfahren oder eine erfindungsgemäße Vorrichtung eingesetzt wird.

Moderne Fortbewegungsmittel sind häufig mit einer Vielzahl von Sensoren zur Erfassung des Umfelds des Fortbewegungsmittels ausgestattet. Insbesondere autonome Fahrzeuge nutzen Umgebungssensorik, wie zum Beispiel Kameras, Laserscanner, Lidarsensoren, Ultraschallsensoren und Radarsensoren. Dabei gilt besonders für autonome Fahrzeuge, dass eine möglichst lückenlose 360°-Erfassung des Umfelds des Fortbewegungsmittels angestrebt wird.

Trotz verschiedener Einbaupositionen der Sensoren am Fortbewegungsmittel und unterschiedlicher eingesetzter Technologien kann es dazu kommen, dass dynamische oder statische Objekte im Umfeld des Fortbewegungsmittels die "Sicht" der Sensoren behindern und den Erfassungsbereich einschränken. Dieser Effekt wird auch als Verdeckung bezeichnet.

Für autonom fahrende Kraftfahrzeuge ist die Umfeldsensorik das Fundament einer sicheren Mobilität. Für alle oben genannten Umfeldsensor-Technologien müssen zu erkennende Objekte, z.B. Fußgänger, im Sichtfeld der Sensoren des autonom fahrenden Kraftfahrzeugs liegen. Das Sichtfeld kann jedoch durch Hindernisse verdeckt sein, z.B. durch parkende Fahrzeuge, sodass statische oder bewegte Objekte erst spät erkannt werden.

Vor diesem Hintergrund beschreibt DE 10 2017 218 932 A1 ein Verfahren zur Bewertung einer Trajektorie eines Fortbewegungsmittels. Bei dem Verfahren sind potentielle Situationen mit Verdeckungen bereits a priori bekannt. Diese Situationen werden vermieden oder abgemildert, indem eine Trajektorie des Fortbewegungsmittels so festgelegt wird, dass die Bereiche, in denen eine Verdeckung auftreten kann, nach Möglichkeit gezielt umfahren werden.

Neben einer gezielten Vermeidung von Verdeckungen besteht die Möglichkeit, dass ein Fortbewegungsmittel in problematischen Situationen auf Daten der Umfeldsensorik eines anderen Fortbewegungsmittels oder auf Daten von Infrastruktureinrichtungen zurückgreift, um eine geeignete Trajektorie zu ermitteln.

Beispielsweise beschreibt DE 10 2018 215 008 A1 ein Verfahren zum Betreiben eines Kraftfahrzeugsystems eines ersten Kraftfahrzeugs. Bei dem Verfahren analysiert ein erstes Kraftfahrzeug eine eigene Fahrsituation und eine Fahrsituation eines zweiten Kraftfahrzeugs, mit dem das erste Kraftfahrzeug Daten austauscht. Zusätzlich berücksichtigt es ein Fahrverhalten oder eine Fahrsituation eines dritten Kraftfahrzeugs, mit dem keine Kommunikationsverbindung besteht.

Ein solcher Car-2-Car-Datenaustausch geht weiter als das Erkennen von Hindernissen durch die diversen Sensoren, die schon heute in den meisten modernen Kraftfahrzeugen verbaut sind. So kann mithilfe des Car-2-Car-Datenaustauschs das Fahren erheblich sicherer werden.

Für Anwendungen zum Car-2-Car-Datenaustausch kann z.B. der WLAN-Standard 802.11p genutzt werden. Die Möglichkeiten zur Kommunikation vernetzter Fahrzeuge lassen sich grob in drei Kategorien unterteilen, d.h. die Kommunikation eines Fahrzeugs mit der Umgebung (V2E: Vehicle to Environment), die Kommunikation eines Fahrzeugs mit dem Fahrer (V2U: Vehicle to User) sowie die Kommunikation eines Fahrzeugs mit einem Netzwerk (V2N: Vehicle to Network).

Für die Kommunikation eines Fahrzeugs mit der Umgebung, dem Fahrer oder externen Netzwerken kommen mehrere Technologien in Frage. Der bereits erwähnte WLAN-Standard 802.11p eignet sich zum Datenaustausch innerhalb einiger hundert Meter. Mit "LTE-V2X" wurde ein eigenes Mobilfunk-Protokoll für Automotive-Anwendungen definiert, das auf der Mobilfunktechnik LTE beziehungsweise 4G basiert. Mit der Einführung der neuen Mobilfunkgeneration dürfte 5G künftig auch LTE-V2X ablösen. Vorstellbar ist auch eine Hybridlösung, die Ad-hoc-Netzwerke zwischen Fahrzeugen mit der Kommunikation über externe Netzwerke wie LTE oder 5G kombiniert.

Eine weitere Möglichkeit für die Kommunikation besteht in der Verwendung von sichtbarem Licht. Als VLC (Visible Light Communication) wird eine drahtlose Übertragungstechnologie bezeichnet, bei der sichtbares Licht mit einem Datensignal moduliert wird. Diese Technik wird auch als LiFi (Light Fidelity) bezeichnet. Für die Datenübertragung muss dabei ein Sichtkontakt zwischen einer Sendeeinheit und einer Empfangseinheit bestehen. Als Lichtquellen können bei Kraftfahrzeugen z.B. LED-Scheinwerfer oder LED-Heckleuchten (LED: Light Emitting Diode; Leuchtdiode) verwendet werden. Das Übertragungsprinzip ist einfach. Mit Hilfe eines Modulators wird eine Hochleistungs-LED sehr schnell ein- und ausgeschaltet. Diese Lichtimpulse werden von einer Photodiode im Empfängergerät detektiert und als Nullen und Einsen in elektrische Impulse umgewandelt. Die Modulation geschieht so schnell, dass das menschliche Auge kein Flackern des Lichts wahrnimmt. Eine bidirektionale Übertragung ist ebenfalls möglich.

In diesem Zusammenhang beschreibt DE 10 2018 131 930 A1 ein System zum Realisieren eines Antikollisionsmechanismus. Ein Führungsfahrzeug weist Sensoren auf, deren Daten es erlauben, eine mögliche Kollision zu erkennen. Wenn eine mögliche Kollision erkannt wird, wird ein nachfolgendes Fahrzeug darüber mittels Datenübertragung mit sichtbarem Licht informiert.

CN 106059666 A beschreibt ein LiFi-basiertes Fahrzeug-Interaktionssystem. Ein Fahrzeug überträgt Fahrdaten mit Hilfe eines LiFi-Chips, der im Scheinwerfer angebracht ist. Die übertragenen Daten werden von einem nachfolgenden oder entgegenkommenden Fahrzeug empfangen. Ein Steuercomputer des nachfolgenden oder entgegenkommenden Fahrzeugs analysiert und verarbeitet die Fahrinformationen, um in Echtzeit Informationen über den Fahrstatus des anderen Fahrzeugs zu erhalten. Auf diese Weise kann der Steuercomputer rechtzeitig wirksame Maßnahmen ergreifen, um Fahrzeugkollisionen oder Auffahrunfälle zu verhindern.

DE 10 2016 209 552 A1 beschreibt ein Verfahren zum Warnen vor einem Fußgänger in einem Umfeld eines Fahrzeugs im geparkten Zustand. Bei dem Verfahren wird ein den Fußgänger repräsentierendes Umfeldsensorsignal eines Umfeldsensors des Fahrzeugs eingelesen und unter Verwendung des Umfeldsensorsignals ein Warnsignal zum Warnen vor dem Fußgänger an ein anderes Fahrzeug ausgegeben.

DE 10 2019 001 092 A1 beschreibt ein Verfahren zum Betreiben eines Fahrerassistenzsystems eines Kraftfahrzeugs, welches eine Kommunikationseinrichtung für eine Fahrzeug-zu-Fahrzeug-Kommunikation mit einem zweiten Kraftfahrzeug und eine Sensoreinrichtung zur Erfassung eines Umgebungsbereichs des Kraftfahrzeugs aufweist. Bei dem Verfahren wird ein Abbild des Umgebungsbereichs anhand der Erfassung des Umgebungsbereichs durch die Sensoreinrichtung erstellt und es werden Objekte und deren Bewegung relativ zu dem ersten Kraftfahrzeug in dem Abbild identifiziert. Anschließend werden interne Übertragungsdaten erstellt, welche die identifizierten Objekte und deren Bewegung umfassen, und an das zweite Kraftfahrzeug übermittelt.

Es ist eine Aufgabe der Erfindung, verbesserte Lösungen zum Bereitstellen von Gefahreninformationen für einen Verkehrsteilnehmer bereitzustellen.

Diese Aufgabe wird durch ein Verfahren mit den Merkmalen des Anspruchs 1, durch ein Computerprogramm mit Instruktionen gemäß Anspruch 8 sowie durch eine Vorrichtung mit den Merkmalen des Anspruchs 9 gelöst. Bevorzugte Ausgestaltungen der Erfindung sind Gegenstand der abhängigen Ansprüche.

Gemäß einem ersten Aspekt der Erfindung umfasst ein Verfahren zum Bereitstellen von Gefahreninformationen für einen Verkehrsteilnehmer die Schritte:
- Detektieren einer potentiellen Gefahrensituation für den Verkehrsteilnehmer anhand von Sensordaten einer Umfeldsensorik eines Fortbewegungsmittels;
- Bestimmen von zu übermittelnden Gefahreninformationen in Bezug auf die Gefahrensituation, wobei die zu übermittelnden Gefahreninformationen Informationen zu einer Trajektorie für den Verkehrsteilnehmer umfassen; und
- Übermitteln der Gefahreninformationen an den Verkehrsteilnehmer mittels lichtbasierter Datenübertragung.

Gemäß einem weiteren Aspekt der Erfindung umfasst ein Computerprogramm Instruktionen, die bei Ausführung durch einen Computer den Computer zur Ausführung der folgenden Schritte zum Bereitstellen von Gefahreninformationen für einen Verkehrsteilnehmer veranlassen:
- Detektieren einer potentiellen Gefahrensituation für den Verkehrsteilnehmer anhand von Sensordaten einer Umfeldsensorik eines Fortbewegungsmittels;
- Bestimmen von zu übermittelnden Gefahreninformationen in Bezug auf die Gefahrensituation, wobei die zu übermittelnden Gefahreninformationen Informationen zu einer Trajektorie für den Verkehrsteilnehmer umfassen; und
- Übermitteln der Gefahreninformationen an den Verkehrsteilnehmer mittels lichtbasierter Datenübertragung.

Der Begriff Computer ist dabei breit zu verstehen. Insbesondere umfasst er auch Steuergeräte, eingebettete Systeme und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist eine Vorrichtung zum Bereitstellen von Gefahreninformationen für einen Verkehrsteilnehmer auf:
- eine Auswerteeinheit zum Detektieren einer potentiellen Gefahrensituation für den Verkehrsteilnehmer anhand von Sensordaten einer Umfeldsensorik eines Fortbewegungsmittels;
- eine Recheneinheit zum Bestimmen von zu übermittelnden Gefahreninformationen in Bezug auf die Gefahrensituation, wobei die zu übermittelnden Gefahreninformationen Informationen zu einer Trajektorie für den Verkehrsteilnehmer umfassen; und
- eine Übermittlungseinheit zum Übermitteln der Gefahreninformationen an den Verkehrsteilnehmer mittels lichtbasierter Datenübertragung.

Die erfindungsgemäße Lösung geht aus von einem ersten Fortbewegungsmittel, das vorzugsweise dazu eingerichtet ist, mit Hilfe einer eigenen Umfeldsensorik eine Verarbeitungskette durchführen zu können, die eine Reihe von Verarbeitungsschritten umfasst: ein Erfassen eines Umfeldes des ersten Fortbewegungsmittels, ein Erkennen von Objekten in dem erfassten Umfeld, eine Kartierung des Umfeldes, eine Berechnung einer Kollisionswahrscheinlichkeit des ersten Fortbewegungsmittels mit im Umfeld erkannten Objekten, sowie eine Trajektorienplanung und ein Steuern bzw. Regeln einer Längs- und Querführung des ersten Fortbewegungsmittels. Bei der erfindungsgemäßen Lösung ist das erste Fortbewegungsmittel zudem dazu eingerichtet, mit seiner Umfeldsensorik für einen anderen Verkehrsteilnehmer eine mögliche Gefahrensituation zu detektieren. Dabei kann es sich insbesondere um Gefahrensituationen handeln, die vom anderen Verkehrsteilnehmer nicht oder zumindest noch nicht selbst detektiert werden können, z.B. weil die Sicht für dessen Umfeldsensorik verdeckt ist. Auf diese Weise kann der andere Verkehrsteilnehmer durch das Fortbewegungsmittel frühzeitig informiert werden und dementsprechend vorausschauend reagieren, z.B. die Bewegung verlangsamen oder vorausschauend ein Ausweichmanöver einleiten.

Erfindungsgemäß umfassen die zu übermittelnden Gefahreninformationen Informationen zu einer Trajektorie für den Verkehrsteilnehmer. Das Fortbewegungsmittel kann unmittelbar Informationen zur Trajektorienplanung an den Verkehrsteilnehmer übertragen bzw. Vorgaben für Trajektorien machen oder sogar direkt ein Steuern bzw. Regeln einer Längs- und Querführung des Verkehrsteilnehmers durchführen. Dies erlaubt ein noch schnelleres Reagieren auf potentielle Gefahrensituationen.

Der Informationsaustausch erfolgt dabei erfindungsgemäß mittels lichtbasierter Datenübertragung, d.h. unter Verwendung von VLC/LiFi-Technologie. Dies erfordert zwar einen Sichtkontakt zwischen den Kommunikationspartnern, erlaubt es dafür aber, schnellstmöglich auf veränderte Situationen reagieren zu können, ohne zunächst Daten-Netzwerke dazwischen schalten zu müssen. Insbesondere kann dieser Übertragungsweg z.B. durch elektromagnetische Wellen nicht gestört werden. Zudem lassen sich sehr hohe Datenraten erzielen.

Vernetzte Fortbewegungsmittel werden immer mehr zu einem attraktiven Angriffsziel von Cyberangriffen. Gelingt es einem Angreifer, in das Computersystem eines Fortbewegungsmittels einzudringen, könnte er zum Beispiel bösartige Kommandos innerhalb des Bordnetzwerks absetzen. Oder er könnte durch Störung des Netzwerks, beispielsweise durch einen Denial-of-Service-Angriff, ein Fortbewegungsmittel daran hindern, Warnsignale anderer Verkehrsteilnehmer zu empfangen. Dies könnte als Konsequenz einen Unfall verursachen. Aufgrund der großen Anzahl möglicher Angriffsmethoden ist es sehr wichtig, die Kommunikation zwischen Fortbewegungsmitteln so sicher wie nur irgend möglich zu implementieren.

Ein Vorteil der Kommunikation zwischen Fortbewegungsmitteln mittels sichtbarem Licht besteht gegenüber den oben genannten Datenübertragungswegen unter Verwendung von WLAN oder Mobilfunk darin, dass eine höhere Sicherheit erreicht wird. Durch die Verwendung von unterschiedlichen Umfeldsensoren eines Fortbewegungsmittels, wie Kameras, Laserscanner, Radarsensoren oder Lidarsensoren, kann beispielsweise sichergestellt werden, dass eine Datenübertragung mittels Licht eindeutig von einem bestimmten anderen Fortbewegungsmittel ausgeht.

Gemäß einem Aspekt der Erfindung ist die potentielle Gefahrensituation für den Verkehrsteilnehmer eine potentielle Kollision mit einem Objekt. Besonders vorteilhaft werden potentielle Gefahrensituationen in Verbindung mit weiteren Verkehrsteilnehmern detektiert, z.B. Fußgängern oder Radfahrern. Aber auch potentielle Gefahrensituationen, die von Tieren oder anderen sich bewegenden Objekten ausgehen, können vorausschauend erkannt werden. Beispielsweise kann es vorkommen, dass ein sich bewegender Fußgänger vom Verkehrsteilnehmer nicht erkannt werden kann, weil die Sicht für dessen Umfeldsensorik verdeckt ist. Der Fußgänger kann aber von der Umfeldsensorik des Fortbewegungsmittels erkannt werden. Wird nun festgestellt, dass der Fußgänger die Trajektorie des Verkehrsteilnehmers kreuzen könnte, so wird der Verkehrsteilnehmer frühzeitig darüber informiert und kann entsprechend reagieren.

Die Verwendung von VLC/LiFi-Technologie ist in diesem Kontext auch deswegen vorteilhaft, da für das Erkennen von möglichen Kollisionen zwischen dem Verkehrsteilnehmer und einem anderen Objekt ohnehin ein Sichtkontakt zu dem Verkehrsteilnehmer und dem Objekt vorhanden sein sollte, um bestmöglich die Pfade des Verkehrsteilnehmers und des Objekts prognostizieren zu können und auch Verkehrsteilnehmer bzw. Objekte zu berücksichtigen, die nicht über bekannte Car2Car-Kommunikationswege erfasst werden können.

Gemäß einem Aspekt der Erfindung wird eine Kollisionswahrscheinlichkeit ermittelt und Gefahreninformationen werden nur dann bestimmt und an den Verkehrsteilnehmer übermittelt, wenn die Kollisionswahrscheinlichkeit einen Schwellwert übersteigt. Insbesondere in Verbindung mit sich bewegenden Personen kann die zukünftige Bewegung dieser Personen in der Regel nicht eindeutig vorhergesagt werden. Es ist daher generell sinnvoll, eine Kollisionswahrscheinlichkeit zu bestimmen. Diese kann dann als Grundlage für das weitere Vorgehen herangezogen werden. Ist die Kollisionswahrscheinlichkeit mit dem Verkehrsteilnehmer nur gering, kann auf die Übermittlung von Gefahreninformationen an den Verkehrsteilnehmer verzichtet werden. Vorzugsweise wird ein Schwellwert für die Kollisionswahrscheinlichkeit festgelegt, bei dessen Überschreitung die gewünschten Gefahreninformationen bestimmt und übermittelt werden. Auf diese Weise wird der Datenaustausch zwischen dem Fortbewegungsmittel und anderen Verkehrsteilnehmern auf ein überschaubares Datenvolumen beschränkt. Alternativ ist es aber ebenso möglich, dass das Ermitteln einer Kollisionswahrscheinlichkeit durch den von der möglichen Kollision betroffenen Verkehrsteilnehmer selbst durchgeführt wird. In diesem Fall werden dem Verkehrsteilnehmer vorzugsweise die Daten der Umfeldsensorik des Fortbewegungsmittels zur Verfügung gestellt.

Die Ermittlung der Kollisionswahrscheinlichkeit des Verkehrsteilnehmers mit einem außerhalb eines Sichtfelds seiner Umfeldsensorik befindlichen Objekt kann in einer weiteren alternativen Ausgestaltung auch auf einem externen Server durchgeführt werden. Dieser bewertet dazu die Daten der Umfeldsensoriken aller beteiligten Fortbewegungsmittel bzw.

Verkehrsteilnehmer in einem bestimmten Umkreis in Hinblick auf Kollisionswahrscheinlichkeiten, gegebenenfalls beschränkt auf bestimmte Verkehrssituationen. Bei Überschreitung eines Schwellwertes für eine Kollisionswahrscheinlichkeit werden dann möglichst die beteiligten Fortbewegungsmittel bzw. Verkehrsteilnehmer informiert.

Die Kollisionswahrscheinlichkeiten können insbesondere auch unter Verwendung eines Algorithmus der künstlichen Intelligenz bestimmt werden, der das Überschreiten eines Schwellwertes für eine Kollisionswahrscheinlichkeit für Verkehrsteilnehmer für eine bestimmte Verkehrslage in einem bestimmten Umfeld bestimmt. Der Algorithmus kann dann möglichst alle beteiligten Fortbewegungsmittel bzw. Verkehrsteilnehmer informieren oder sogar möglichst sichere Trajeketorien oder Fahrmanöver für alle erreichbaren Fortbewegungsmittel bzw. Verkehrsteilnehmer vorgeben. So kann z.B. ein Unfallschwerpunkt, wie eine schlecht einsehbare Kreuzung, mit den Verkehrsteilnehmern in einem bestimmten Umkreis über eine künstliche Intelligenz vernetzt werden, indem zentral die Daten aller verfügbaren Umfeldsensoren verarbeitet und in Hinblick auf Kollisionswahrscheinlichkeiten bewertet werden. Gegebenenfalls können auch am Gefahrenschwerpunkt fest stationierte Umfeldsensoren, z.B. Kameras, in eine Gesamtbewertung einfließen.

Gemäß einem Aspekt der Erfindung umfassen die zu übermittelnden Gefahreninformationen Informationen zum Objekt. Vorzugsweise kann das Fortbewegungsmittel mit Hilfe der eigenen Umfeldsensorik eine Verarbeitungskette in Bezug auf den Verkehrsteilnehmer durchführen, die eine Reihe von Verarbeitungsschritten umfasst: ein Erfassen eines Umfeldes des Verkehrsteilnehmers, ein Erkennen von Objekten in dem erfassten Umfeld des Verkehrsteilnehmers, eine Kartierung des Umfeldes, sowie gegebenenfalls eine Berechnung einer Kollisionswahrscheinlichkeit des Verkehrsteilnehmers mit im Umfeld erkannten Objekten. Diese Informationen zum Objekt werden dann an den Verkehrsteilnehmer weitergeben. Der Verkehrsteilnehmer kann dann seinerseits mit diesen zusätzlichen Informationen des Fortbewegungsmittels eine Trajektorienplanung und ein Steuern bzw. Regeln einer Längs- und Querführung durchführen.

Gemäß einem Aspekt der Erfindung ist der Verkehrsteilnehmer ein zweites Fortbewegungsmittel. Die Verwendung der erfindungsgemäßen Lösung ist besonders vorteilhaft, um ein weiteres Fortbewegungsmittel zu warnen, das seinerseits unter Verwendung von verfügbaren Assistenzfunktionen geeignete Maßnahmen zur Vermeidung einer Kollision ergreifen kann. Falls keine geeigneten Assistenzfunktionen verfügbar sind, kann zumindest eine Warnung an einen Bediener des Fortbewegungsmittels ausgegeben werden.

Grundsätzlich ist die erfindungsgemäße Lösung aber auch geeignet, um z.B. Fußgänger oder Radfahrer vor potentiellen Gefahrensituationen zu warnen. Beispielsweise können Fußgänger oder Radfahrer smarte Kleidung oder Wearables tragen, die VLC-Daten erfassen können und bei Bedarf Signale an den Nutzer der Kleidung oder des Wearables weitergeben können, z.B. ein Vibrationssignal als Notsignal.

Gemäß einem Aspekt der Erfindung werden mittels lichtbasierter Datenübertragung Information auch an weitere Verkehrsteilnehmer übermittelt. Vorzugsweise werden die Information bezüglich einer erkannten potentiellen Gefahrensituation an möglichst alle gefährdeten Verkehrsteilnehmer übermittelt, sodass diese bei Bedarf möglichst frühzeitig Maßnahmen ergreifen und mögliche Kollisionen oder Gefahrensituationen vorausschauend verhindern können. Darüber hinaus können zusätzlich auch weitere Verkehrsteilnehmer vom Fortbewegungsmittel entsprechende Informationen erhalten, insbesondere auch solche Verkehrsteilnehmer, für die selbst nicht die Gefahr einer Kollision besteht, die jedoch gegebenenfalls auf mögliche Brems- oder Ausweichmanöver des von der Gefahrensituation betroffenen Verkehrsteilnehmers reagieren müssen. Diese Verkehrsteilnehmer müssen unter Umständen ebenfalls auch Brems- oder Lenkmanöver ausführen. Indem diese Verkehrsteilnehmer frühzeitig informiert werden, kann eine maximale Sicherheit aller Verkehrsteilnehmer erreicht werden, wenn jeweils ein sicherer und möglichst schneller Datenaustausch möglich ist.

Besonders vorteilhaft wird ein erfindungsgemäßes Verfahren oder eine erfindungsgemäße Vorrichtung in einem Fortbewegungsmittel eingesetzt. Bei dem Fortbewegungsmittel kann es sich insbesondere um ein Kraftfahrzeug handeln, z.B. einen Personenkraftwagen oder ein Nutzfahrzeug, aber auch um ein Schienenfahrzeug oder ein Fluggerät, z.B. einen Volocopter, etc.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch ein Verfahren zum Bereitstellen von Gefahreninformationen für einen Verkehrsteilnehmer;
- Fig. 2: zeigt eine erste Ausführungsform einer Vorrichtung zum Bereitstellen von Gefahreninformationen für einen Verkehrsteilnehmer;
- Fig. 3: zeigt eine zweite Ausführungsform einer Vorrichtung zum Bereitstellen von Gefahreninformationen für einen Verkehrsteilnehmer;
- Fig. 4: stellt schematisch ein Fortbewegungsmittel dar, in dem eine erfindungsgemäße Lösung realisiert ist;
- Fig. 5: eine Verkehrssituation, in der für einen Verkehrsteilnehmer ein Risiko einer Kollision mit einem Objekt besteht;
- Fig. 6: veranschaulicht die Übermittlung von Gefahreninformationen an weitere Verkehrsteilnehmer;
- Fig. 7: veranschaulicht die Übermittlung von Gefahreninformationen an eine Person; und
- Fig. 8: zeigt schematisch zukünftige Trajektorien nach dem Übermitteln der Gefahreninformationen.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

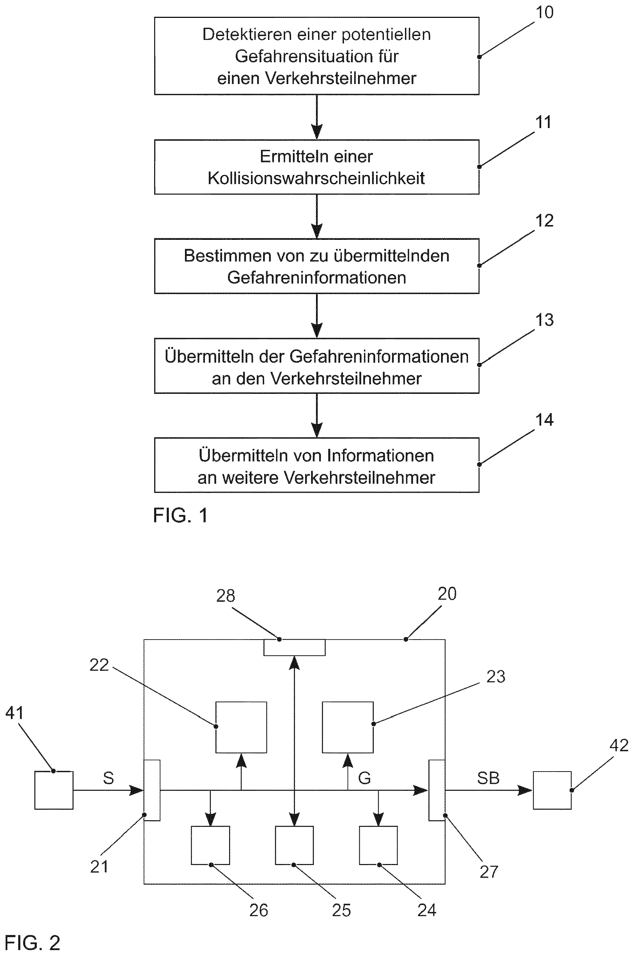

Fig. 1 zeigt schematisch ein Verfahren zum Bereitstellen von Gefahreninformationen für einen Verkehrsteilnehmer. In einem ersten Schritt wird eine potentielle Gefahrensituation für den Verkehrsteilnehmer anhand von Sensordaten einer Umfeldsensorik eines Fortbewegungsmittels detektiert 10, z.B. eine potentielle Kollision mit einem Objekt. In diesem Zusammenhang kann zudem eine Kollisionswahrscheinlichkeit ermittelt werden 11.

Des Weiteren werden in Bezug auf die Gefahrensituation zu übermittelnde Gefahreninformationen bestimmt 12. Diese werden dann mittels lichtbasierter Datenübertragung an den Verkehrsteilnehmer übermittelt 13. Bei dem Verkehrsteilnehmer kann es sich insbesondere um ein zweites Fortbewegungsmittel handeln. Zusätzlich können auch an weitere Verkehrsteilnehmer mittels lichtbasierter Datenübertragung Information übermittelt werden 14. Das Bestimmen und Übermitteln von Gefahreninformation kann an die Bedingung geknüpft sein, dass die Kollisionswahrscheinlichkeit einen Schwellwert übersteigt. Die Gefahreninformationen können beispielsweise Informationen zum Objekt oder zu einer Trajektorie für den Verkehrsteilnehmer umfassen.

Fig. 2 zeigt eine vereinfachte schematische Darstellung einer ersten Ausführungsform einer Vorrichtung 20 zum Bereitstellen von Gefahreninformationen für einen Verkehrsteilnehmer. Die Vorrichtung 20 hat einen Eingang 21, über den eine Auswerteeinheit 22 Sensordaten S einer Umfeldsensorik 41 eines Fortbewegungsmittels empfängt. Die Auswerteeinheit 22 ist eingerichtet, anhand der Sensordaten S eine potentielle Gefahrensituation für den Verkehrsteilnehmer zu detektieren, z.B. eine potentielle Kollision mit einem Objekt. In diesem Zusammenhang kann durch die Auswerteeinheit 22 zudem eine Kollisionswahrscheinlichkeit ermittelt werden. Eine Recheneinheit 23 bestimmt dann zu übermittelnde Gefahreninformationen G in Bezug auf die Gefahrensituation. Eine Übermittlungseinheit 24 übermittelt schließlich die Gefahreninformationen G an den Verkehrsteilnehmer mittels lichtbasierter Datenübertragung. Zu diesem Zweck können entsprechende Steuerbefehle SB über einen Ausgang 27 der Vorrichtung an eine lichtbasierte Datenübertragungseinheit 42 ausgegeben werden. Bei dem Verkehrsteilnehmer kann es sich insbesondere um ein zweites Fortbewegungsmittel handeln. Zusätzlich können auch an weitere Verkehrsteilnehmer mittels lichtbasierter Datenübertragung Information übermittelt werden. Das Bestimmen und Übermitteln von Gefahreninformation kann an die Bedingung geknüpft sein, dass die Kollisionswahrscheinlichkeit einen Schwellwert übersteigt. Die Gefahreninformationen können beispielsweise Informationen zum Objekt oder zu einer Trajektorie für den Verkehrsteilnehmer umfassen.

Die Auswerteeinheit 22, die Recheneinheit 23 und die Übermittlungseinheit 24 können von einer Kontrolleinheit 25 gesteuert werden. Über eine Benutzerschnittstelle 28 können gegebenenfalls Einstellungen der Auswerteeinheit 22, der Recheneinheit 23, der Übermittlungseinheit 24 oder der Kontrolleinheit 25 geändert werden. Die in der Vorrichtung 20 anfallenden Daten können bei Bedarf im Speicher 26 abgelegt werden, beispielsweise für eine spätere Auswertung oder für eine Nutzung durch die Komponenten der Vorrichtung 20. Die Auswerteeinheit 22, die Recheneinheit 23, die Übermittlungseinheit 24 sowie die Kontrolleinheit 25 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 21 und der Ausgang 27 können als getrennte Schnittstellen oder als eine kombinierte bidirektionale Schnittstelle implementiert sein.

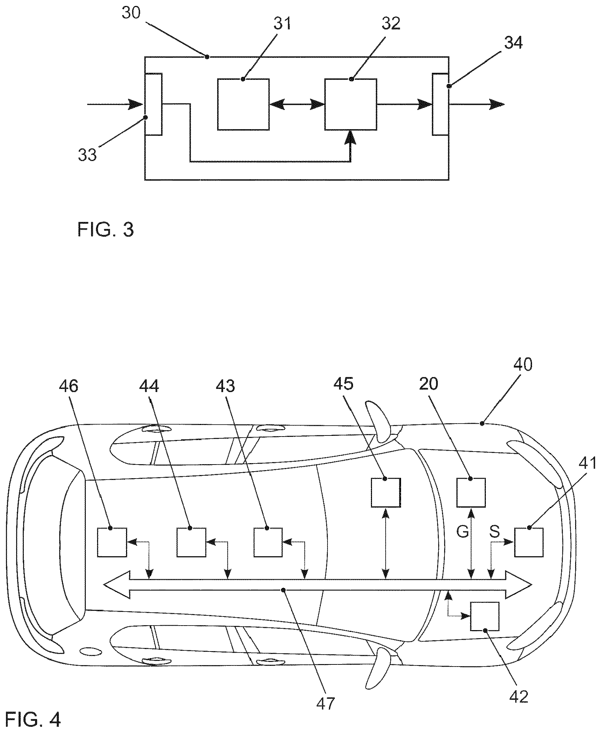

Fig. 3 zeigt eine vereinfachte schematische Darstellung einer zweiten Ausführungsform einer Vorrichtung 30 zum Bereitstellen von Gefahreninformationen für einen Verkehrsteilnehmer. Die Vorrichtung 30 weist einen Prozessor 32 und einen Speicher 31 auf. Beispielsweise handelt es sich bei der Vorrichtung 30 um einen Computer oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, beispielsweise von Informationen einer Sensorik des Fortbewegungsmittels. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 26, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 4 stellt schematisch ein Fortbewegungsmittel 40 dar, in dem eine erfindungsgemäße Lösung realisiert ist. Bei dem Fortbewegungsmittel 40 handelt es sich in diesem Beispiel um ein Kraftfahrzeug. Das Kraftfahrzeug weist eine Umfeldsensorik 41 auf, mit der Sensordaten S zu einem Umfeld des Kraftfahrzeugs erfasst werden können. Die Umfeldsensorik 41 kann beispielsweise Kameras, Laserscanner, Radarsensoren, Lidarsensoren oder Ultraschallsensoren umfassen. Eine erfindungsgemäße Vorrichtung 20 zum Bereitstellen von Gefahreninformationen G wertet die Sensordaten S aus und veranlasst bei Bedarf die Übermittlung von Gefahreninformationen G an einen anderen Verkehrsteilnehmer mittels einer lichtbasierten Datenübertragungseinheit 42. Diese kann z.B. in LED-Scheinwerfer oder LED-Heckleuchten des Kraftfahrzeugs integriert sein und VLC/LiFi-Technologie verwenden. Weitere Komponenten des Kraftfahrzeugs sind ein Navigationssystem 43, eine funkbasierte Datenübertragungseinheit 44 sowie eine Reihe von Assistenzsystemen 45, von denen eines exemplarisch dargestellt ist. Vom Navigationssystem 43 können bei Bedarf GPS-Daten bereitgestellt werden. Mittels der funkbasierten Datenübertragungseinheit 44 kann eine Verbindung zu Dienstanbietern, zu Infrastruktureinrichtungen oder bei Bedarf auch zu anderen Kraftfahrzeugen oder aufgebaut werden. Zur Speicherung von Daten ist ein Speicher 46 vorhanden. Der Datenaustausch zwischen den verschiedenen Komponenten des Kraftfahrzeugs erfolgt über ein Netzwerk 47.

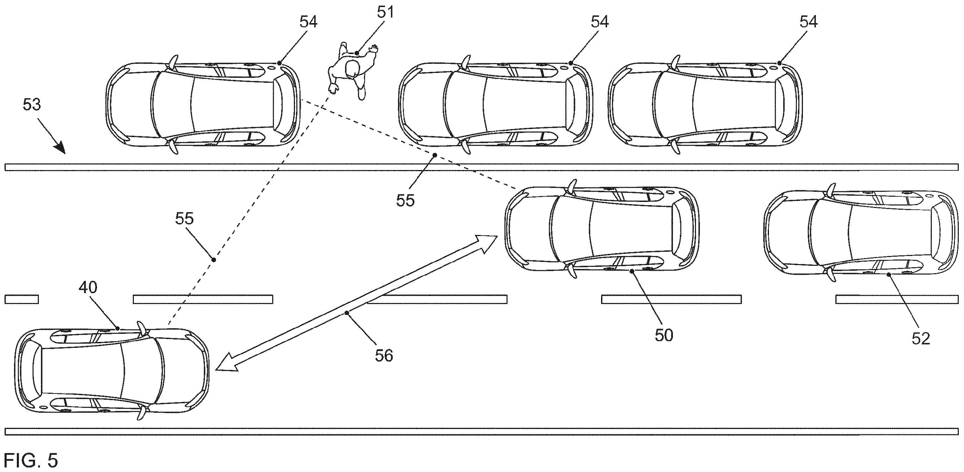

Nachfolgend soll ein Beispiel einer erfindungsgemäßen Lösung anhand von Fig. 5 bis Fig. 8 beschrieben werden.

Fig. 5 zeigt eine Verkehrssituation, in der für einen Verkehrsteilnehmer 50 ein Risiko einer Kollision mit einem Objekt 51 besteht. In diesem Beispiel handelt es sich bei dem Objekt 51 um eine Person und bei dem Verkehrsteilnehmer 50 um ein Kraftfahrzeug. Der Verkehrsteilnehmer 50 fährt auf einer Straße 53 entlang einer Reihe geparkter Fahrzeuge. Diese stellen Hindernisse 54 für eine Umfeldsensorik des Verkehrsteilnehmers 50 dar, sodass das Sichtfeld 55 der Umfeldsensorik eingeschränkt ist. Dem Verkehrsteilnehmer 50 folgt ein weiterer Verkehrsteilnehmer 52, in diesem Beispiel ebenfalls ein Kraftfahrzeug. In die Gegenrichtung fährt ein Fortbewegungsmittel 40, in diesem Fall ebenfalls ein Kraftfahrzeug, dessen Umfeldsensorik aufgrund des in Bezug auf das Objekt 51 weniger eingeschränkten Sichtfeldes 55 in der Lage ist, das Objekt 51 zu detektieren. Vom Fortbewegungsmittel 40 wird eine drohende Kollision zwischen dem Verkehrsteilnehmer 50 und dem Objekt 51 erkannt. Die entsprechenden Gefahreninformationen in Bezug auf die Gefahrensituation werden vom Fortbewegungsmittel 40 daraufhin über eine VLC-Kommunikationsverbindung 56 an den Verkehrsteilnehmer 50 übermittelt, der daraufhin geeignete Maßnahmen zur Vermeidung einer Kollision ergreifen kann. Das Bestimmen und Übermitteln von Gefahreninformation kann an die Bedingung geknüpft sein, dass eine ermittelte Kollisionswahrscheinlichkeit einen Schwellwert übersteigt.

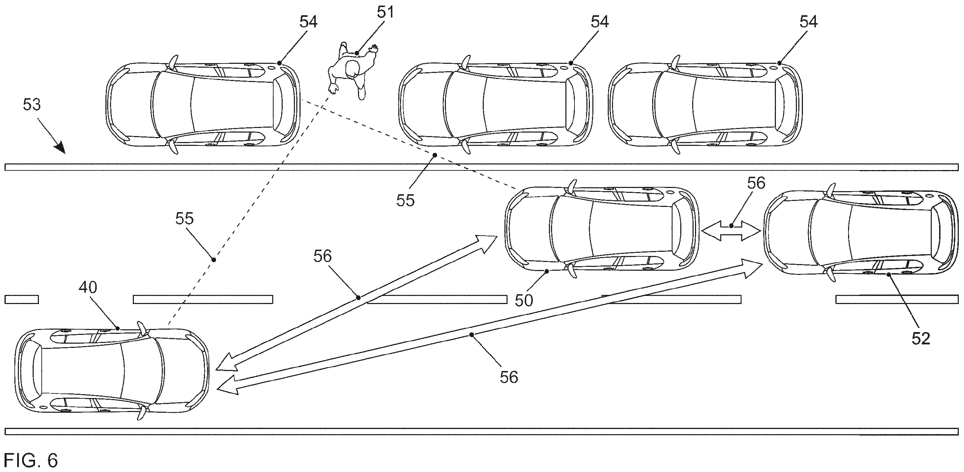

Fig. 6 veranschaulicht die Übermittlung von Gefahreninformationen an weitere Verkehrsteilnehmer 52. Der dem Verkehrsteilnehmer 50 folgende weitere Verkehrsteilnehmer 52 ist seinerseits nicht unmittelbar von einer Kollision mit dem Objekt 51 bedroht. Dennoch können auch an diesen weiteren Verkehrsteilnehmer 52 Gefahreninformationen über eine VLC-Kommunikationsverbindung 56 übermittelt werden, z.B. durch das Fortbewegungsmittel 40 oder durch den direkt betroffenen Verkehrsteilnehmer 50. Indem der weitere Verkehrsteilnehmer 52 frühzeitig informiert wird, kann das mit der Gefahrensituation verbundene Risiko minimiert werden, wenn jeweils ein sicherer und möglichst schneller Datenaustausch möglich ist. Das Bestimmen und Übermitteln von Gefahreninformation kann auch hier wiederum an die Bedingung geknüpft sein, dass eine ermittelte Kollisionswahrscheinlichkeit einen Schwellwert übersteigt.

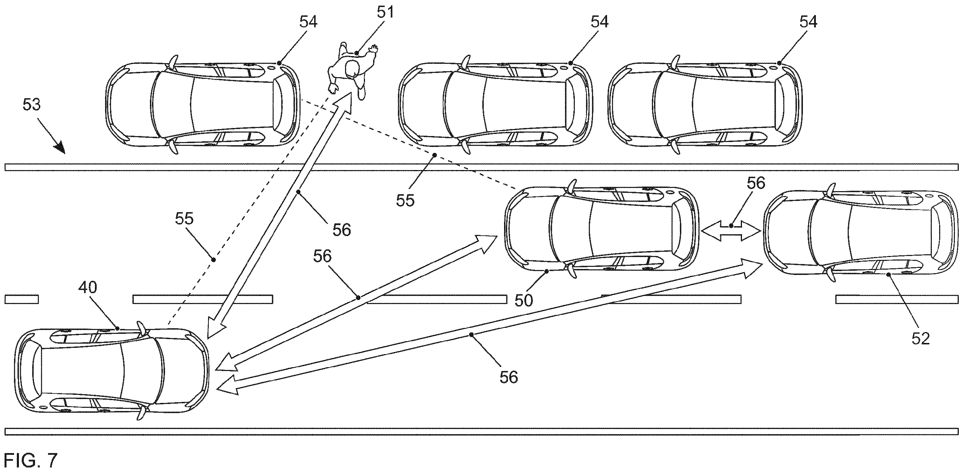

Fig. 7 veranschaulicht die Übermittlung von Gefahreninformationen an eine Person. In einer Ausführungsform der Erfindung wird auch das von einer Kollision gefährdete Objekt 51 informiert, hier also die Person, wenn eine Kollision droht. Dies kann wiederum davon abhängig gemacht werden, dass eine ermittelte Kollisionswahrscheinlichkeit einen Schwellwert übersteigt. Beispielsweise kann der Fußgänger smarte Kleidung oder ein Wearable tragen, die VLC-Daten erfassen können und bei Bedarf ein Warnsignal erzeugen können, z.B. ein Vibrationssignal.

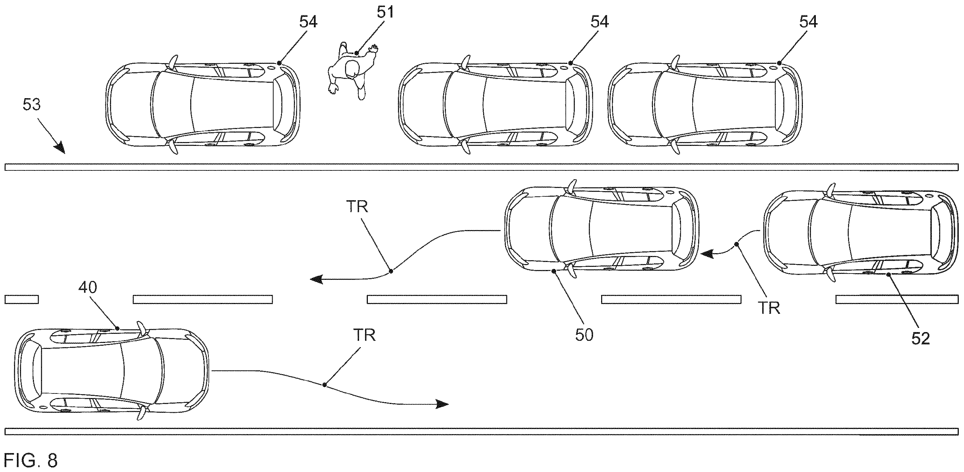

Fig. 8 zeigt schematisch zukünftige Trajektorien TR nach dem Übermitteln der Gefahreninformationen. Das Fortbewegungsmittel 40, das die potentielle Gefahrensituation detektiert und die weiteren Verkehrsteilnehmer 50, 52 entsprechend informiert hat, weicht in Fahrtrichtung ein wenig nach rechts aus, um Platz für die Ausweichmanöver der weiteren Verkehrsteilnehmer 50, 52 zu schaffen. Die weiteren Verkehrsteilnehmer 50, 52 weichen in Fahrrichtung etwas weiter nach links aus und bremsen gegebenenfalls zusätzlich ab, sodass eine Kollision mit der Person möglichst vermieden wird, sollte diese auf die Straße 53 laufen.

### Bezugszeichenliste

- 10: Detektieren einer potentiellen Gefahrensituation für einen Verkehrsteilnehmer
- 11: Ermitteln einer Kollisionswahrscheinlichkeit
- 12: Bestimmen von zu übermittelnden Gefahreninformationen
- 13: Übermitteln der Gefahreninformationen an den Verkehrsteilnehmer
- 14: Übermitteln von Information an weitere Verkehrsteilnehmer
- 20: Vorrichtung
- 21: Eingang
- 22: Auswerteeinheit
- 23: Recheneinheit
- 24: Übermittlungseinheit
- 25: Kontrolleinheit
- 26: Speicher
- 27: Ausgang
- 28: Benutzerschnittstelle
- 30: Vorrichtung
- 31: Speicher
- 32: Prozessor
- 33: Eingang
- 34: Ausgang
- 40: Fortbewegungsmittel
- 41: Umfeldsensorik
- 42: Lichtbasierte Datenübertragungseinheit
- 43: Navigationssystem
- 44: Funkbasierte Datenübertragungseinheit
- 45: Assistenzsystemen
- 46: Speicher
- 47: Netzwerk
- 50: Verkehrsteilnehmer
- 51: Objekt
- 52: Verkehrsteilnehmer
- 53: Straße
- 54: Hindernis
- 55: Sichtfeld
- 56: VLC-Kommunikationsverbindung
- G: Gefahreninformationen
- S: Sensordaten
- SB: Steuerbefehl
- TR: Trajektorie

## Patentansprüche

1. Verfahren zum Bereitstellen von Gefahreninformationen (G) für einen Verkehrsteilnehmer (50), mit den Schritten:
- Detektieren (10) einer potentiellen Gefahrensituation für den Verkehrsteilnehmer (50) anhand von Sensordaten (S) einer Umfeldsensorik (41) eines Fortbewegungsmittels (40);
- Bestimmen (12) von zu übermittelnden Gefahreninformationen (G) in Bezug auf die Gefahrensituation, wobei die zu übermittelnden Gefahreninformationen (G) Informationen zu einer Trajektorie (TR) für den Verkehrsteilnehmer (50) umfassen; und
- Übermitteln (13) der Gefahreninformationen (G) an den Verkehrsteilnehmer (50) mittels lichtbasierter Datenübertragung.

2. Verfahren gemäß Anspruch 1, wobei die potentielle Gefahrensituation für den Verkehrsteilnehmer (50) eine potentielle Kollision mit einem Objekt (51) ist.

3. Verfahren gemäß Anspruch 2, wobei eine Kollisionswahrscheinlichkeit ermittelt wird (11) und Gefahreninformationen (G) nur dann bestimmt (12) und an den Verkehrsteilnehmer (50) übermittelt (13) werden, wenn die Kollisionswahrscheinlichkeit einen Schwellwert übersteigt.

4. Verfahren gemäß Anspruch 2 oder 3, wobei die zu übermittelnden Gefahreninformationen (G) Informationen zum Objekt (51) umfassen.

5. Verfahren gemäß einem der vorherigen Ansprüche, wobei die Informationen zu der Trajektorie (TR) für den Verkehrsteilnehmer (50) Vorgaben für Trajektorien umfassen oder eine Längs- und Querführung des Verkehrsteilnehmers steuern.

6. Verfahren gemäß einem der vorherigen Ansprüche, wobei der Verkehrsteilnehmer (50) ein zweites Fortbewegungsmittel ist.

7. Verfahren gemäß einem der vorherigen Ansprüche, wobei mittels lichtbasierter Datenübertragung Information auch an weitere Verkehrsteilnehmer (51, 52) übermittelt werden (14).

8. Computerprogramm mit Instruktionen, die bei Ausführung durch einen Computer den Computer zur Ausführung der Schritte eines Verfahrens gemäß einem der Ansprüche 1 bis 7 zum Bereitstellen von Gefahreninformationen (G) für einen Verkehrsteilnehmer (50) veranlassen.

9. Vorrichtung (20) zum Bereitstellen von Gefahreninformationen (G) für einen Verkehrsteilnehmer (50), mit:
- einer Auswerteeinheit (22) zum Detektieren (10) einer potentiellen Gefahrensituation für den Verkehrsteilnehmer (50) anhand von Sensordaten (S) einer Umfeldsensorik (41) eines Fortbewegungsmittels (40);
- einer Recheneinheit (23) zum Bestimmen (12) von zu übermittelnden Gefahreninformationen (G) in Bezug auf die Gefahrensituation, wobei die zu übermittelnden Gefahreninformationen (G) Informationen zu einer Trajektorie (TR) für den Verkehrsteilnehmer (50) umfassen; und
- einer Übermittlungseinheit (24) zum Übermitteln (13) der Gefahreninformationen (G) an den Verkehrsteilnehmer (50) mittels lichtbasierter Datenübertragung.

10. Fortbewegungsmittel (40), **dadurch gekennzeichnet, dass** das Fortbewegungsmittel (40) eine Vorrichtung (20) gemäß Anspruch 9 aufweist oder eingerichtet ist, ein Verfahren gemäß einem der Ansprüche 1 bis 7 zum Bereitstellen von Gefahreninformationen (G) für einen Verkehrsteilnehmer (50) auszuführen.
